# EUROPÄISCHE PATENTSCHRIFT

(11) **EP 1 999 521 B1**
(45) Veröffentlichungstag und Bekanntmachung des Hinweises auf die Patenterteilung: **26.01.2011**
(21) Anmeldenummer: 06722726.4
(22) Anmeldetag: 29.03.2006
(51) Int. Cl.: G05B 19/042

(54) **FELDGERÄT**
FIELD DEVICE
APPAREIL DE TERRAIN

(43) Veröffentlichungstag der Anmeldung: 10.12.2008
(73) Patentinhaber: SIEMENS AKTIENGESELLSCHAFT, 80333 München (DE)
(72) Erfinder: JURISCH, Andreas, 16727 Schwante (DE); WALZ, Stefan, 13127 Berlin (DE)
(86) Internationale Anmeldenummer: PCT/DE2006/000575
(87) Internationale Veröffentlichungsnummer: WO 2007/110006

(56) Entgegenhaltungen:
- EP-A- 1 096 348
- EP-A- 1 420 496
- EP-A2- 1 401 171
- WO-A-2005/054965
- WO-A2-2004/072743
- DE-A1- 10 128 829

## Beschreibung

Die Erfindung bezieht sich auf ein Feldgerät, insbesondere zum Einsatz in energietechnischen Anlagen wie z. B. in Energieversorgungsanlagen, mit den Merkmalen gemäß dem Oberbegriff des Anspruchs 1.

Ein derartiges Feldgerät wird beispielsweise durch das Schutzgerät SIPROTEC 7SA511 bzw. 7SA513 der SIEMENS AG gebildet. Dieses Schutzgerät ist mit einer Mikroprozessoranordnung ausgestattet, die während des Betriebs des Feldgerätes ein die Gerätefunktion festlegendes Programmmodul ausführt.

Feldgeräte in energietechnischen Anlagen realisieren heutzutage eine Vielzahl an Funktionen der Schutz- und Leittechnik. Die Leistungsfähigkeit und die Funktionalität der Geräte steigen kontinuierlich an. Aus Sicht der Feldgerätehersteller besteht zunehmend das Problem, für jeden Kundenwunsch das jeweils passende Gerät bereitzuhalten: Dabei müssen selbstverständlich von den Geräten alle Funktionen bereit gestellt werden, die der jeweilige Kunde wünscht; gleichzeitig muss jedoch aus Kosten- und Preisbildungsaspekten darauf geachtet werden, dass die Geräte bezüglich ihrer Funktionen nicht überdimensioniert werden und mehr Funktionen ausführen können, als der Kunde braucht und zu bezahlen bereit ist.

Hinsichtlich der Parametrierung eines Feldgerätes ist z. B. aus der Europäischen Patentanmeldung EP 1 401 171 A2 bekannt, eine Prüfung durchzuführen, ob eingegebene Parameter eines Parametersatzes funktionalen Abhängigkeiten zwischen mehreren Parametern genügen; wird eine Verletzung einer solchen funktionalen Abhängigkeit ermittelt, wird der Parametersatz für ungültig erklärt.

Der Erfindung liegt die Aufgabe zugrunde, ein Feldgerät anzugeben, dass sich einfach und schnell derart konfigurieren lässt, dass vorgegebene Gerätefunktionen ausführbar sind und andere Funktionen nicht oder nur beschränkt zur Verfügung stehen.

Diese Aufgabe wird erfindungsgemäß durch ein Feldgerät mit den Merkmalen des Anspruchs 1 gelöst. Vorteilhafte Ausgestaltungen des erfindungsgemäßen Feldgeräts sind in Unteransprüchen angegeben.

Danach ist erfindungsgemäß vorgesehen, dass das Feldgerät eine Sicherungseinrichtung aufweist, die derart ausgestaltet ist, dass sie prüft, ob ein eingegebener, eine benutzerseitig gewünschte Gerätefunktion beschreibender Funktionsbeschreibungsblock eine freigeschaltete Gerätefunktion beschreibt, und im Falle einer nicht-freigeschalteten Gerätefunktion deren Ausführung blockiert sowie im Falle einer freigeschalteten Gerätefunktion deren Ausführung freigibt, wobei die Sicherungseinrichtung derart ausgestaltet ist, dass sie einen in dem Funktionsbeschreibungsblock enthaltenen Merkmalsblock mit einem im Feldgerät abgespeicherten oder dem Feldgerät zugänglichen Kennzeichnungsblock, der den freigeschalteten Funktionsumfang des Feldgerätes beschreibt, vergleicht und die Ausführung der im Funktionsbeschreibungsblock beschriebenen Gerätefunktion blockiert, wenn die im Merkmalsblock beschriebenen Merkmale in dem Kennzeichnungsblock fehlen oder als gesperrt definiert sind. Der Funktionsbeschreibungsblock kann beispielsweise in Form einer Datei - z. B. im XML-Format - eingebbar sein.

Ein wesentlicher Vorteil des erfindungsgemäßen Feldgeräts ist darin zu sehen, dass sich der benutzerseitig nutzbare Funktionsumfang des Geräts sehr einfach und kostengünstig allein durch ein Freischalten oder Sperren von im Gerät vorhandenen Gerätefunktionen einstellen lässt. Der dem Benutzer tatsächlich zur Verfügung stehende Funktionsumfang kann somit kleiner sein als der Funktionsumfang, den das Gerät grundsätzlich bereitzustellen imstande wäre, wenn weitere Gerätefunktionen freigeschaltet wären. Das herstellerseitige Konfigurieren kann also allein durch ein beispielsweise softwaremäßiges Freischalten und Sperren von Gerätefunktionen erfolgen.

Ein weiterer wesentlicher Vorteil des erfindungsgemäßen Feldgeräts besteht darin, dass die herstellerseitige Lagerhaltung deutlich vereinfacht ist. Im Idealfall würde es theoretisch ausreichen, einen einzigen Feldgerätetyp hardwareseitig herzustellen und die Festlegung des endgültigen Funktionsumfangs des Gerätes und des endgültigen Gerätetyps allein durch eine softwaremäßige Freischaltung und Sperrung zu bewerkstelligen.

Ein dritter wesentlicher Vorteil des erfindungsgemäßen Feldgeräts ist darin zu sehen, dass sich dieses trotz der vorhandenen Sicherungseinrichtung sehr einfach bedienen lässt: Ein Festlegen der benutzerseitig gewünschten Gerätefunktion erfolgt - im Rahmen der freigeschalteten Gerätefunktionen - allein durch die Eingabe eines die Gerätefunktion beschreibenden Funktionsbeschreibungsblocks - beispielsweise im XML-Format. Eine solche Eingabe kann beispielsweise mit einem vom Hersteller bereitgestellten Konfigurationstool erfolgen.

Besonders einfach und damit vorteilhaft lässt sich eine Freischaltung und Sperrung von Gerätefunktionen dadurch erreichen, dass die Sicherungseinrichtung derart ausgestaltet ist, dass sie einen in dem Funktionsbeschreibungsblock enthaltenen Merkmalsblock mit einem im Feldgerät abgespeicherten oder dem Feldgerät zugänglichen Kennzeichnungsblock, der den freigeschalteten Funktionsumfang des Feldgerätes beschreibt, vergleicht und die Ausführung der im Funktionsbeschreibungsblock beschriebenen Gerätefunktion blockiert, wenn die im Merkmalsblock beschriebenen Merkmale in dem Kennzeichnungsblock fehlen oder als gesperrt definiert sind.

Im Hinblick darauf, ein missbräuchliches Überwinden einer Gerätefunktionssperrung durch den Benutzer möglichst sicher zu verhindern, wird es als vorteilhaft angesehen, wenn die Sicherungseinrichtung einen Interpreterbaustein aufweist, der den benutzerseitig oder herstellerseitig eingegebenen Funktionsbeschreibungsblock interpretiert und unter Heranziehung einer Mehrzahl an firmwareseitig, vorzugsweise hardwaremäßig, in dem Feldgerät vorinstallierten Funktionsbausteinen erst anschließend das entsprechende Programmmodul erzeugt, wenn der eingegebene Funktionsbeschreibungsblock eine freigeschaltete Gerätefunktion beschreibt. Bei dieser vorteilhaften Ausgestaltung des Feldgerätes wird der Zugriff des Benutzers auf die interne Funktion erschwert und Missbrauchsmöglichkeiten werden reduziert. Außerdem steht das für den Betrieb des Gerätes erforderliche Programmmodul noch nicht zur Verfügung, so dass es benutzerseitig nicht ausgelesen und kopiert oder - beispielsweise im Hinblick auf eine Freischaltung gesperrter Gerätefunktionen - missbräuchlich modifiziert werden kann.

Vorzugsweise ist der Kennzeichnungsblock in dem Feldgerät abgespeichert. In diesem Fall weist der Kennzeichnungsblock bevorzugt eine Geräteidentifikation auf, die das Feldgerät, für das der Kennzeichnungsblock bestimmt ist, kennzeichnet.

Alternativ kann der Kennzeichnungsblock in einem externen Speicherbaustein abgespeichert sein, der mit dem Feldgerät zu dessen Betrieb verbunden wird. In diesem Fall enthält der Kennzeichnungsblock bevorzugt eine Speicheridentifikation, die den externen Speicher, zu dem der Kennzeichnungsblock zugeordnet ist, kennzeichnet. Bei dieser Ausführungsform ist der Kennzeichnungsblock zwar für eine Vielzahl an Feldgeräten geeignet, ein Kopierschutz bleibt jedoch gewährleistet.

Besonders bevorzugt ist der Kennzeichnungsblock mit einer elektronischen Unterschrift signiert und die Sicherungseinrichtung derart ausgestaltet, dass sie die weitere Bearbeitung des Funktionsbeschreibungsblocks blockiert, wenn die Überprüfung der elektronischen Unterschrift ein negatives Ergebnis erbringt. Mit einer solchen Signatur des Kennzeichnungsblocks lässt sich vermeiden, dass der Kennzeichnungsblock missbräuchlich von einem Benutzer geändert werden kann, um die Gerätefunktionen nachträglich zu erweitern.

Beispielsweise ist die Sicherungseinrichtung derart ausgestaltet ist, dass sie den mit einem ersten Schlüssel eines Schlüsselpaares verschlüsselten Kennzeichnungsblock zur Überprüfung der elektronischen Unterschrift mit einem zweiten Schlüssel des Schlüsselpaares entschlüsselt. Vorzugsweise ist der zweite Schlüssel des Schlüsselpaares in einem gegen ein unbefugtes Auslesen geschützten Speicherbereich des Feldgerätes abgespeichert.

Auch kann die Sicherungseinrichtung derart ausgestaltet sein, dass sie den Merkmalsblock auf das Vorliegen einer gültigen elektronischen Unterschrift hin überprüft und die weitere Bearbeitung des Funktionsbeschreibungsblocks blockiert, wenn die Überprüfung der elektronischen Unterschrift ein negatives Ergebnis erbringt. Eine Signatur von Merkmalsblöcken ist beispielsweise zu empfehlen, wenn sichergestellt werden soll, dass nur mit einem Konfigurationstool des Herstellers eine Eingabe von Funktionsbeschreibungsblöcken erfolgen kann. Durch eine solche Beschränkung auf ein Konfigurationstool des Herstellers lässt sich beispielsweise sicherstellen, dass nur Funktionsbeschreibungsblöcke und Merkmalsblöcke verwendet werden können, die herstellerseitig geprüft und im Hinblick auf Garantie und Haftung als sicher eingestuft worden sind.

Vorzugsweise ist die Sicherungseinrichtung derart ausgestaltet, dass sie den mit einem ersten Schlüssel eines weiteren Schlüsselpaares verschlüsselten Merkmalsblock zur Überprüfung der elektronischen Unterschrift mit einem zweiten Schlüssel des weiteren Schlüsselpaares entschlüsselt. Der zweite Schlüssel des weiteren Schlüsselpaares ist bevorzugt in einem gegen ein unbefugtes Auslesen geschützten Speicherbereich abgespeichert.

Der oder die gegen ein unbefugtes Auslesen geschützten Speicherbereiche sind vorzugsweise in einem oder jeweils einem Baustein integriert, der eine wesentliche, unverzichtbare Grundfunktion des Feldgerätes ausführt. Dadurch lässt sich vermeiden, dass Bausteine mit Schlüsseln durch beliebige andere elektrische Bausteine mit anderen Schlüsseln ersetzt werden können, um beispielsweise die Signatursicherung auszuhebeln. Beispielsweise steuern die Bausteine einen Datenbus oder eine Schnittstelle des Feldgerätes. Die Bausteine mit geschützten Speicherbereichen können beispielsweise in ASIC-, FPGA- oder CPLD-Bausteinen integriert sein.

Im Übrigen wird es im Hinblick auf ein Höchstmaß an Benutzerfreundlichkeit als vorteilhaft angesehen, wenn der Kennzeichnungsblock einen Grundfunktionsblock und einen Optionsblock enthält, wobei der Grundfunktionsblock einen freigeschalteten Grundfunktionsumfang des Feldgerätes und der Optionsblock einen freigeschalteten Optionsumfang festlegt, innerhalb dessen benutzerseitig weitere Zusatzfunktionen zu dem Grundfunktionsumfang hinzugefügt werden dürfen, ohne dass es zu einer Blockierung des Feldgerätes durch die Sicherungseinrichtung kommt.

In dem Optionsblock ist bevorzugt für jede optionale Zusatzfunktion jeweils eine Wertzahl abgespeichert und der freigeschaltete Optionsumfang ist bevorzugt durch einen Maximalwert definiert (nachfolgend Prepaid-Variante genannt). Die Sicherungseinrichtung addiert beispielsweise die Wertzahlen der benutzerseitig ausgewählten Zusatzfunktionen und blockiert eine Ausführung der resultierenden Gerätefunktion, wenn der Summenwert den Maximalwert überschreitet.

Alternativ kann der Kennzeichnungsblock ausschließlich eine einzige Gerätefunktion beschreiben und keine Optionen zulassen, wenn kundenseitig nur eine einfache Version des Feldgerätes gewünscht wird. In diesem Fall wird der Funktionsbeschreibungsblock einschließlich Merkmalsblock vorzugsweise bereits herstellerseitig in dem Feldgerät abgespeichert.

Die Erfindung wird nachfolgend anhand von Ausführungsbeispielen näher erläutert; dabei zeigen beispielhaft
- Figur 1: ein Ausführungsbeispiel für ein erfindungsgemäßes Feldgerät,
- Figur 2: den Aufbau eines Sicherungsmoduls einer Sicherungs- einrichtung des Feldgerätes gemäß Figur 1,
- Figur 3: ein Ausführungsbeispiel für die Erzeugung eines Kennzeichnungsblocks für das Feldgerät gemäß Figur 1 und
- Figur 4: ein Ausführungsbeispiel für die Erzeugung eines Funktionsbeschreibungsblocks für das Feldgerät ge- mäß Figur 1.

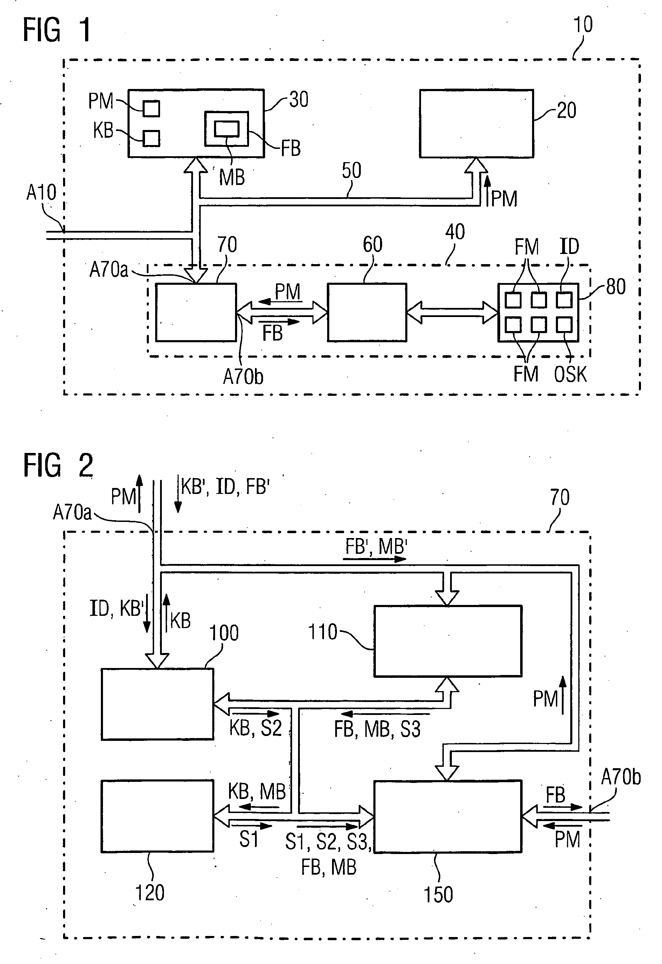

In der Figur 1 erkennt man ein Feldgerät 10, das mit einer Mikroprozessoreinheit 20 sowie einem Hauptspeicher 30 und einer Sicherungseinrichtung 40 ausgestattet ist. Die Mikroprozessoreinheit 20, der Hauptspeicher 30 sowie die Sicherungseinrichtung 40 sind über einen geräteinternen Datenbus 50 miteinander sowie mit einem äußeren Anschluss A10 des Feldgerätes 10 verbunden.

Wie sich der Figur 1 entnehmen lässt, ist die Sicherungseinrichtung 40 mit einem Interpreterbaustein 60, einem Sicherungsmodul 70 sowie einem Speicherbereich 80, in dem Funktionsbausteine FM abgespeichert sind, ausgestattet. Das Sicherungsmodul 70 steht über den Anschluss A70a mit dem Datenbus 50 und über den Anschluss A70b mit dem Interpreterbaustein 60 in Verbindung.

Das Feldgerät 10 gemäß Figur 1 wird beispielsweise wie folgt betrieben:
In einem ersten Schritt, der noch während der Herstellung bzw. Parametrierung des Feldgerätes 10 erfolgt, wird ein Kennzeichnungsblock KB in dem Hauptspeicher 30 des Feldgeräts 10 abgespeichert; ein solcher Abspeichervorgang kann beispielsweise über den Anschluss A10 des Feldgerätes 10 erfolgen. In dem Kennzeichnungsblock KB ist der für den Betrieb des Feldgeräts zulässige Funktionsumfang beschrieben. In dem Kennzeichnungsblock KB kann beispielsweise festgelegt sein, dass das Feldgerät 10 als Distanzschutzgerät, als Power-Quality-Messgerät oder als Differentialschutzmessgerät betrieben werden darf.

Nach der Vorinstallation des Kennzeichnungsblocks KB und einer Auslieferung des Feldgeräts 10 an einen Endkunden, der nachfolgend auch als Benutzer bezeichnet wird, wird in dem Hauptspeicher 30 benutzerseitig ein Funktionsbeschreibungsblock FB mittels eines Konfigurationswerkzeugs, das der Übersicht halber in der Figur 1 nicht dargestellt ist und an den Anschluss A10 des Feldgeräts angeschlossen wird, abgespeichert. In dem Funktionsbeschreibungsblock FB gibt der Benutzer in das Feldgerät 10 ein, wie er das Gerät benutzen möchte und welche Gerätefunktionen das Feldgerät ausführen soll. Die auszuführenden Gerätefunktionen sind in einem Merkmalsblock MB des Funktionsbeschreibungsblocks FB enthalten; alternativ kann der Funktionsbeschreibungsblock FB auch allein durch den Merkmalsblock MB definiert sein.

Wird nun das Feldgerät 10 von dem Benutzer in Betrieb genommen, so prüft die Sicherungseinrichtung 40 zunächst, ob der benutzerseitig eingegebene Funktionsbeschreibungsblock FB bzw. der darin enthaltende Merkmalsblock MB eine für das Feldgerät 10 freigeschaltete Gerätefunktion beschreibt. Stellt die Sicherungseinrichtung 40 dabei fest, dass die benutzerseitig gewünschte Gerätefunktion in dem Kennzeichnungsblock KB als freigeschaltet definiert ist, so gibt sie den Gerätebetrieb frei, so dass die Mikroprozessoreinheit 20 die Gerätefunktion ausführen darf. Weiterhin wird geprüft, ob der im Feldgerät 10 enthaltene Kennzeichnungsblock KB die in der Sicherungseinrichtung 40 gespeicherte ID des Feldgerätes enthält und die Signatur des Kennzeichnungsblockes KB und des Merkmalsblocks MB mit dem im Speicherbereich 80 abgespeicherten öffentlichen Schlüssel Key OSK überprüfbar ist.

Das zur Steuerung der Mikroprozessoreinheit 20 erforderliche ausführbare Programmmodul PM wird von dem Interpreterbaustein 60 geliefert, der die in dem Merkmalsblock MB bzw. dem Funktionsbeschreibungsblock FB beschriebene Gerätefunktion auswertet und unter Heranziehung der Funktionsbausteine FM, die in dem Speicherbereich 80 abgespeichert sind, das Programmmodul PM erzeugt.

Stellt die Sicherungseinrichtung 40 hingegen fest, dass in dem Funktionsblock FB keine für das Feldgerät 10 freigeschaltete Gerätefunktion beschrieben ist, so blockiert sie den Interpreterbaustein 60 und/oder die Mikroprozessoreinheit 20, damit eine Inbetriebnahme des Feldgeräts 10 mit der nicht zugelassenen Gerätefunktion verhindert wird.

Falls also beispielsweise in dem Kennzeichnungsblock KB festgelegt ist, dass das Feldgerät 10 ausschließlich als Distanzschutzgerät, als Power-Quality-Messgerät oder als Differentialschutzgerät betrieben werden darf, so ist eine Inbetriebnahme mit einer anderen Gerätefunktion auch dann ausgeschlossen, wenn der Interpreterbaustein 60 prinzipiell in der Lage wäre, diese Gerätefunktion unter Verwendung der im Speicherbereich 80 abgespeicherten Funktionsbausteine FM nachzubilden. Mit anderen Worten kann also das Feldgerät 10 aufgrund der in dem Speicherbereich 80 hinterlegten Funktionsbausteine FM und der Funktionsweise des Interpreterbausteins 60 durchaus geeignet sein, andere als die im Kennzeichnungsblock KB definierten Gerätefunktionen auszuführen; zu einer solchen Ausführung kommt es jedoch dennoch nicht, da die Sicherungseinrichtung 40 zunächst überprüft, ob die benutzerseitig gewünschte Gerätefunktion in dem Kennzeichnungsblock KB beschrieben und freigeschaltet ist.

Um zu verhindern, dass der Kennzeichnungsblocks KB benutzerseitig verfälscht wird und beispielsweise hinsichtlich der zulässigen Gerätefunktionen erweitert wird, wird der Kennzeichnungsblock KB vorzugsweise bereits herstellerseitig mit einer elektronischen Unterschrift signiert, indem er beispielsweise unter Verwendung eines ersten Schlüssels eines ersten Schlüsselpaares verschlüsselt wird; bei der Verschlüsselung wird außerdem die Geräteidentifikationsnummer ID des Feldgerätes 10 herangezogen. Der verschlüsselte Kennzeichnungsblock KB' wird anschließend in dem Hauptspeicher 30 abgespeichert.

Auch der Funktionsbeschreibungsblock FB und der darin enthaltene verschlüsselte Merkmalsblock MB sind vorzugsweise mit einer elektronischen Unterschrift signiert und verschlüsselt abgespeichert. Eine Verschlüsselung des Merkmalsblocks MB ist von Vorteil, um zu verhindern, dass benutzerseitig Funktionsbeschreibungsblöcke im Feldgerät 10 installiert werden, die nicht vom Hersteller des Feldgeräts 10 hergestellt und geprüft worden sind. Die Verschlüsselung der Blöcke FB und MB erfolgt beispielsweise unter Verwendung eines ersten Schlüssels eines zweiten Schlüsselpaares unter Bildung eines verschlüsselten Funktionsbeschreibungsblocks FB' und eines darin enthaltenen verschlüsselten Merkmalsblocks MB'.

Bei der Ver- und Entschlüsselung des Kennzeichnungsblocks KB, des Funktionsbeschreibungsblocks FB und des darin enthaltenen Merkmalsblocks MB wird vorzugsweise auf eine Verschlüsselungstechnik auf der Basis von Schlüsselpaaren zurückgegriffen. Mit einem ersten Schlüssel erfolgt dabei die Verschlüsselung, die nur mit dem zweiten Schlüssel des Schlüsselpaares rückgängig gemacht werden kann. Eine solche Verschlüsselung erlaubt das Lesen einer verschlüsselten Datei also nur dann, wenn der zweite Schlüssel vorliegt. Der Inhaber des zweiten Schlüssels kann gleichzeitig auch die Authentizität der Datei überprüfen, denn eine sinnvolle Entschlüsselung ist mit dem zweiten Schlüssel nur dann möglich, wenn die Ursprungsdatei tatsächlich mit dem ersten Schlüssel des Schlüsselpaares, den der Schlüsselpaarinhaber geheim hält und der Dritten somit unbekannt ist, und damit von dem Inhaber selbst verschlüsselt worden ist. Die beschriebene Verschlüsselung kann beispielsweise auf Basis des RSA- oder triple DES-Verfahrens erfolgen. Alternativ kann mittels eines Hash-code-verfahrens, beispielsweise mit dem MD5- oder SHA1-Algorithmus ein sogenannter Message Digest über den Merkmalsblock MB und den Kennzeichnungsblock KB berechnet, anschließend verschlüsselt und den Blöcken KB und MB als Signatur zugefügt werden. Diese Signatur kann im Feldgerät 10 durch Entschlüsseln des Message Digest mit dem im Speicher 80 enthaltenen öffentlichen Schlüssel Key OSK und anschließendem Nachvollziehen der Berechnung des Message Digest mit dem SHA1- oder MD5-Algorithmus überprüft werden. Eine Übereinstimmung des entschlüsselten und des nachvollzogenen Message Digest ergibt sich nur dann, wenn die Blöcke KB und MB zwischen dem Signatur- und Überprüfungszeitpunkt nicht verändert wurden.

Die Funktionsweise des Sicherungsmoduls 70 der Sicherungseinrichtung 40 gemäß Figur 1 wird nun nachfolgend beispielhaft anhand der Figur 2 näher erläutert. Man erkennt in der Figur 2 eine erste nicht beobachtbare Einheit 100 sowie eine zweite nicht beobachtbare Einheit 110, die über eine Vergleichseinrichtung 120 miteinander in Verbindung stehen. Unter einer nicht beobachtbaren Einheit ist eine Einheit zu verstehen, die während ihres Betriebs nicht abhörbar ist, so dass ihre Arbeitsweise von außen nicht nachvollzogen werden kann. Die beiden nicht beobachtbaren Einheiten 100 und 110 können beispielsweise durch geschützte Hardwareblöcke, beispielsweise in Form eines ASIC-, FPGA- oder Gatearray-Bausteins realisiert sein.

Die Aufgabe der nicht beobachtbaren Einheit 100 besteht darin, zunächst zu überprüfen, ob der in dem Hauptspeicher 30 des Feldgerätes 10 abgespeicherte verschlüsselte Kennzeichnungsblock KB' der herstellerseitig erzeugte Originalkennzeichnungsblock ist; durch diese Überprüfung wird verhindert, dass das Sicherungsmodul 70 für seine weitere Überprüfung ein womöglich benutzerseitig verfälschten Kennzeichnungsblock KB' heranzieht.

Zur Überprüfung der Echtheit des verschlüsselten Kennzeichnungsblocks KB' fragt die Einheit 100 zunächst die Geräteidentifikationsnummer ID des Feldgerätes 70 ab und entschlüsselt unter Verwendung eines in ihr hardwaremäßig und "versteckt" abgespeicherten zweiten Schlüssels des bereits erwähnten ersten Schlüsselpaares den Kennzeichnungsblock KB'. Der entschlüsselte Kennzeichnungsblock KB gelangt zu der Vergleichseinrichtung 120, die den entschlüsselten Kennzeichnungsblock KB mit dem Merkmalsblock MB vergleicht.

Auch der Funktionsbeschreibungsblock FB und der darin enthaltene Merkmalsblock MB sind - wie bereits erwähnt - vorzugsweise verschlüsselt abgespeichert, was in der Figur 2 durch das Bezugszeichen MB' angedeutet ist. Die Entschlüsselung erfolgt unter Verwendung eines zweiten, in der zweiten Einheit 110 hardwaremäßig und versteckt abgespeicherten Schlüssels des zweiten Schlüsselpaares in der zweiten Einheit 110. Wie bereits bei der Ver- und Entschlüsselung des Kennzeichnungsblocks KB kann auch hier auf das RSA- oder 3DES-Verfahren zurückgegriffen werden. Alternativ kann die elektronische Unterschrift der Blöcke wie bereits beschrieben überprüft werden.

Die Einheit 110 erzeugt ausgangsseitig den entschlüsselten Merkmalsblock MB und überträgt diesen zu der Vergleichseinrichtung 120, die den entschlüsselten Merkmalsblock MB und den entschlüsselten Kennzeichnungsblock KB inhaltlich miteinander vergleicht und ein Freigabesignal S1 mit einer logischen 1 erzeugt, wenn das Vergleichsergebnis positiv ist und die im entschlüsselten Merkmalsblock MB definierte Gerätefunktion einer im entschlüsselten Kennzeichnungsblock KB beschriebenen und freigeschalteten Gerätefunktion entspricht.

Stellt die nicht beobachtbare Einheit 100 beim Entschlüsseln des verschlüsselten Kennzeichnungsblocks KB' fest, dass sich dieser mit dem zweiten Schlüssel des ersten Schlüsselpaares nicht entschlüsseln lässt, so erzeugt sie ausgangsseitig ein Steuersignal S2 mit einer logischen 0, wodurch angezeigt wird, dass der Kennzeichnungsblock KB verändert worden ist und sich nicht mehr entschlüsseln lässt. Nur dann, wenn beim Entschlüsseln des verschlüsselten Kennzeichnungsblocks KB' ein lesbarer bzw. verständlicher Kennzeichnungsblock KB gebildet wird, erzeugt die Einheit 100 ausgangsseitig das Steuersignal S2 mit einer logischen 1, wodurch angezeigt wird, dass der verschlüsselte Kennzeichnungsblock KB' ein Original bzw. vom Hersteller erzeugter Kennzeichnungsblock KB ist.

In entsprechender Weise erzeugt die Einheit 110 ausgangsseitig ein Steuersignal.S3 mit einer logischen 1, wenn sie beim Entschlüsseln des verschlüsselten Merkmalsblocks MB' feststellt, dass mit dem in der Einheit 110 abgespeicherten zweiten Schlüssel des zweiten Schlüsselpaares eine Entschlüsselung erfolgreich durchführbar ist. Sie erzeugt hingegen das Steuersignal S3 mit einer logischen 0, wenn sich mit dem abgespeicherten zweiten Schlüssel des zweiten Schlüsselpaares keine Entschlüsselung durchführen lässt.

Nur wenn alle drei Steuersignale S1, S2 und S3 mit einer logischen 1 vorliegen, gibt eine Steuereinrichtung 150 des Sicherungsmoduls 70 das Feldgerät 10 frei, so dass der Interpreterbaustein 60 unter Verwendung des Funktionsbeschreibungsblocks FB das Programmmodul PM unter Zuhilfenahme der Funktionsbausteine FB erzeugen kann.

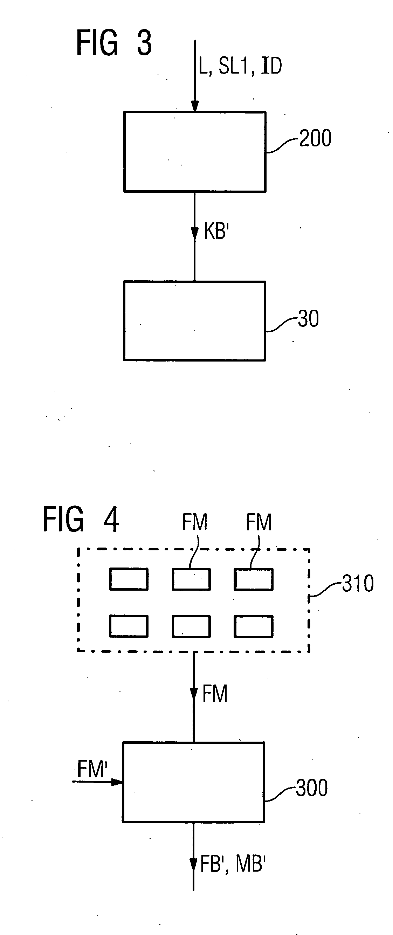

In der Figur 3 ist ein Ausführungsbeispiel für das Herstellen und Abspeichern des Kennzeichnungsblocks KB gemäß Figur 1 dargestellt. Man erkennt, dass in einer Verschlüsselungseinrichtung 200 eine herstellerseitig als zulässig vorgegebene Gerätefunktionsliste L mittels eines Codierverfahrens unter Verwendung des ersten Schlüssels SL1 des ersten Schlüsselpaares verschlüsselt wird; dabei wird die Geräteidentifikationsnummer ID des Feldgeräts 70 mitberücksichtigt, so dass ein verschlüsselter Kennzeichnungsblock KB' gebildet wird, der ausschließlich für ein bestimmtes Feldgerät 70 geeignet ist. Auf anderen Geräten, deren Geräteidentifikationsnummer ID mit der in dem Kennzeichnungsblock KB' abgespeicherten Geräteidentifikationsnummer nicht übereinstimmt, ist der Kennzeichnungsblock KB' somit nicht lauffähig.

Der auf diese Weise gebildete verschlüsselte Kennzeichnungsblock KB' wird in dem Hauptspeicher 30 des Feldgeräts 10 gemäß Figur 1 abgespeichert.

In der Figur 4 ist ein Ausführungsbeispiel für eine Konfiguration des Feldgeräts 10 gemäß Figur 1 dargestellt. Eine solche Konfiguration wird beispielsweise mit einem Konfigurationswerkzeug benutzerseitig vorgenommen. Hierzu ist das Konfigurationswerkzeug mit einer Konfigurationssoftware 300 ausgestattet, die herstellerseitig zur Verfügung gestellt wird. Die.Konfigurationssoftware greift auf eine Vielzahl an vorzugsweise signierten Funktionsmodulen FM zu, die beispielsweise in einer Datenbank 310 abgespeichert sind und zur Bildung eines Funktionsbeschreibungsblockes FB für das Feldgerät 10 herangezogen werden können. Der Benutzer wählt die von ihm gewünschten Funktionsmodule FM' aus und erzeugt mit der Konfigurationssoftware den entsprechenden Funktionsbeschreibungsblock FB mit dem darin enthaltenden Merkmalsblock MB, der die für das Feldgerät 10 gewünschte Gerätefunktion beschreibt. Die Konfigurationssoftware 300 verarbeitet vorzugsweise ausschließlich korrekt signierte Funktionsmodule FM, um sicherzustellen, dass nur vom Hersteller freigegebene Funktionsmodule FM verwendet werden können.

Um außerdem sicherzustellen, dass in dem Feldgerät ausschließlich Funktionsblöcke FB und Merkmalsblöcke MB verwendet werden können, die geräteherstellerseitig geprüft und als zuverlässig eingestuft sind und mit der Gerätesoftware 300 weiterverarbeitet worden sind, ist in der Gerätesoftware 300 ein Verschlüsselungsmodul enthalten, das bei der Erzeugung des Funktionsbeschreibungsblocks FB und des Merkmalsblocks MB eine Verschlüsselung - beispielsweise auf der Basis eines Hash-Codes - durchführt. Ausgangsseitig wird somit ein verschlüsselter Funktionsbeschreibungsblock FB' und ein verschlüsselter Merkmalsblock MB' erzeugt, die von dem Sicherungsmodul 70 des Feldgeräts 10 bei der Inbetriebnahme des Geräts auf ihre Echtheit hin überprüft werden.

Bei den obigen Ausführungen wurde beispielhaft davon ausgegangen, dass in dem Kennzeichnungsblock KB eine oder mehrere zulässige Gerätefunktionen definiert sind, die nachfolgend benutzerseitig ausgewählt werden können. Alternativ ist es beispielsweise auch möglich, in dem Kennzeichnungsblock KB eine oder mehrere Grundfunktionen zu definieren, die benutzerseitig durch optionale Zusatzfunktionen ergänzt werden können. Der Optionsumfang, in dem der Benutzer solche Optionen auswählen kann, kann in dem Kennzeichnungsblock KB beispielsweise derart hinterlegt sein, dass jeder optionalen Zusatzfunktion eine Wertzahl zugeordnet ist. Gleichzeitig wird in dem Kennzeichnungsblock KB definiert, welche Gesamtwertzahl die benutzerseitig gewünschten Zusatzoptionen insgesamt aufweisen dürfen (Prepaid-Funktion). Ist in dem Kennzeichnungsblock KB der Funktionsumfang des Feldgeräts 10 in der beschriebenen Art hinterlegt, so prüft das Sicherungsmodul 70 nach Inbetriebnahme des Feldgeräts, 10, ob die benutzerseitig gewünschten Zusatzoptionen von ihrem Gesamtwert her den im Kennzeichnungsblock KB definierten Maximalwert überschreiten oder nicht. Überschreitet die Gesamtzahl den vorgegebenen Maximalwert, so wird das Sicherungsmodul 70 die Funktion des Feldgerätes 10 sperren. In diesem Fall ist der Benutzer des Feldgerätes gezwungen, durch Anlegen eines neuen Funktionsbeschreibungsblocks FB dafür zu sorgen, dass ein für das Feldgerät 10 zulässiger Funktionsumfang angefordert wird.

Die Abspeicherung der beiden zweiten Schlüssel des ersten und zweiten Schlüsselpaares im Feldgerät 10 kann alternativ auch im Hauptspeicher 30 erfolgen, sofern die Schlüssel wiederum selbst verschlüsselt werden, beispielsweise unter Verwendung eines X.509 Zertifikats.

Ein Merkmalsblock MB kann im XML-Format beispielsweise wie folgt aussehen:

### <APP_ATTRIBUTES>

<GUID VAL="AJB3FX7hK"/> <!--- Eineindeutige ID der Applikation -->
<USAGE VAL="PTOC"/> <!--- Applikation enthält UMZ-Schutz -->
<USAGE VAL="DIS"/> <!--- Applikation enthält Distanzschutz -->
<USAGE VAL="CONTROL"/> <!--- Applikation enthält Steuerungsfunktionalität -->
<USAGE VAL="PQ_BASIC"/> <!--- Applikation enthält PQ-Basisfunktionen -->
<CPU_TICKS VAL="1455"/> <!--- Applikation verbraucht 1455 CPU-Leistungseinheiten -->
<RAM_SIZE VAL="283"/> <!--- Applikation belegt 283 KB Speicher -->
<SIGN VAL="GA56789VQA4f8BOGFHZUIOUIZU465FGHJ"/> </APP_ATTRIBUTES>

Ein Ausführungsbeispiel für einen Kennzeichnungsblock KB gemäß Figur 1 mit variabler, benutzerseitig auswählbarer Applikation (bzw. Gerätefunktion) mit Prepaid-Funktion kann im XML-Format beispielsweise wie folgt aussehen:

### <DEV_ATTRIBUTES>

<DEV_ID="3085756"/> <!--- Seriennummer des Gerätes -->
<USAGE VAL="PTOC"/> <!--- Applikation darf UMZ-Schutz enthalten -->
<USAGE VAL="DIS"/> <!--- Applikation darf Distanzschutz enthalten -->
<USAGE VAL="CONTROL"/> <!--- Applikation darf Steuerungsfunktionalität enthalten -->
<USAGE VAL="PQ_ADV"/> <!--- Applikation darf erweiterte PQ-Funkt. enthalten -->
<USAGE VAL="PQ_BASIC"/> <!--- Applikation darf PQ-Basisfunktionen enthalten -->
<CPU_TICKS VAL="2500"/> <!--- Applikation darf max. 2500 CPU-Leistungseinheiten verbrauchen -->
<RAM_SIZE VAL="512"/> <!--- Applikation darf max. 512 KB Speicher belegen -->
<SIGN VAL="GA56789VQAVJJKFHZTDGDVEGHHGJFGHJ"/> </DEV_ATTRIBUTES>

Zum Vergleich ist nachfolgend noch ein Ausführungsbeispiel für einen Kennzeichnungsblock KB mit fest definierter Applikation im XML-Format aufgeführt:

### <DEV_ATTRIBUTES>

<DEV_ID= "3085756" /> <!--- Seriennummer des Gerätes -->
<GUID VAL="AJB3FX7hK"/> <!--- Eineindeutige ID der zugelassenen Applikation -->
<CPU_TICKS VAL="1455" /> <!--- Applikation verbraucht 1455 CPU-Leistungseinheiten -->
<RAM_SIZE VAL="283" /> <!--- Applikation belegt 283 KB Speicher -->
<SIGN VAL="GA56789VQA4f8BOGFHZUIOUIZU465FGHJ" /> </DEV_ATTRIBUTES>

## Patentansprüche

1. Feldgerät (10), insbesondere Schutzgerät, mit einer Mikroprozessoranordnung (20), die während des Betriebs des Feldgerätes ein die Gerätefunktion festlegendes Programmmodul (PM) ausführt,
**dadurch gekennzeichnet, dass**
- das Feldgerät eine Sicherungseinrichtung (40) aufweist, die derart ausgestaltet ist, dass sie prüft, ob ein eingegebener, eine benutzerseitig gewünschte Gerätefunktion beschreibender Funktionsbeschreibungsblock (FB) eine freigeschaltete Gerätefunktion beschreibt, und im Falle einer nicht-freigeschalteten Gerätefunktion deren Ausführung blockiert sowie im Falle einer freigeschalteten Gerätefunktion deren Ausführung freigibt, wobei
- die Sicherungseinrichtung derart ausgestaltet ist, dass sie einen in dem Funktionsbeschreibungsblock enthaltenen Merkmalsblock (MB) mit einem im Feldgerät abgespeicherten oder dem Feldgerät zugänglichen Kennzeichnungsblock (KB), der den freigeschalteten Funktionsumfang des Feldgerätes beschreibt, vergleicht und die Ausführung der im Funktionsbeschreibungsblock beschriebenen Gerätefunktion blockiert, wenn die im Merkmalsblock beschriebenen Merkmale in dem Kennzeichnungsblock fehlen oder als gesperrt definiert sind.

2. Feldgerät nach Anspruch 1,
**dadurch gekennzeichnet, dass** die Sicherungseinrichtung einen Interpreterbaustein (60) aufweist, der den eingegebenen Funktionsbeschreibungsblock (FB) interpretiert und unter Heranziehung einer Mehrzahl an firmwareseitig in dem Feldgerät vorinstallierten Funktionsbausteinen (FM) das entsprechende Programmmodul (PM) erzeugt, wenn der eingegebene Funktionsbeschreibungsblock eine freigeschaltete Gerätefunktion beschreibt.

3. Feldgerät nach Anspruch 1 oder 2,
**dadurch gekennzeichnet, dass** der Kennzeichnungsblock in dem Feldgerät abgespeichert ist.

4. Feldgerät nach Anspruch 3,
**dadurch gekennzeichnet, dass** der Kennzeichnungsblock eine Geräteidentifikation (ID) enthält, die das Feldgerät, für das der Kennzeichnungsblock bestimmt ist, kennzeichnet.

5. Feldgerät nach Anspruch 1 oder 2,
**dadurch gekennzeichnet, dass** der Kennzeichnungsblock in einem externen Speicherbaustein, der mit dem Feldgerät zu dessen Betrieb verbunden wird, abgespeichert ist.

6. Feldgerät nach Anspruch 5,
**dadurch gekennzeichnet, dass** der Kennzeichnungsblock eine Speicheridentifikation enthält, die den externen Speicher, zu dem der Kennzeichnungsblock zugeordnet ist, kennzeichnet.

7. Feldgerät nach einem der voranstehenden Ansprüche, **dadurch gekennzeichnet, dass** der Kennzeichnungsblock mit einer elektronischen Unterschrift signiert ist und die Sicherungseinrichtung derart ausgestaltet ist, dass sie die weitere Bearbeitung des Funktionsbeschreibungsblocks blockiert, wenn die Überprüfung der elektronischen Unterschrift ein negatives Ergebnis (S2) erbringt.

8. Feldgerät nach Anspruch 7,
**dadurch gekennzeichnet, dass** die Sicherungseinrichtung derart ausgestaltet ist, dass sie den mit einem ersten Schlüssel eines Schlüsselpaares verschlüsselten Kennzeichnungsblock zur Überprüfung der elektronischen Unterschrift mit einem zweiten Schlüssel des Schlüsselpaares entschlüsselt.

9. Feldgerät nach Anspruch 8,
**dadurch gekennzeichnet, dass** der zweite Schlüssel des Schlüsselpaares in einem gegen ein unbefugtes Auslesen geschützten Speicherbereich des Feldgerätes abgespeichert ist.

10. Feldgerät nach einem der voranstehenden Ansprüche, **dadurch gekennzeichnet, dass** die Sicherungseinrichtung derart ausgestaltet ist, dass sie den Merkmalsblock auf das Vorliegen einer gültigen elektronischen Unterschrift hin überprüft und die weitere Bearbeitung des Funktionsbeschreibungsblocks blockiert, wenn die Überprüfung der elektronischen Unterschrift ein negatives Ergebnis (S3) erbringt.

11. Feldgerät nach Anspruch 10,
**dadurch gekennzeichnet, dass** die Sicherungseinrichtung derart ausgestaltet ist, dass sie den mit einem ersten Schlüssel eines weiteren Schlüsselpaares verschlüsselten Merkmalsblock zur Überprüfung der elektronischen Unterschrift mit einem zweiten Schlüssel des weiteren Schlüsselpaares entschlüsselt.

12. Feldgerät nach Anspruch 11,
**dadurch gekennzeichnet, dass** der zweite Schlüssel des weiteren Schlüsselpaares in einem gegen ein unbefugtes Auslesen geschützten Speicherbereich abgespeichert ist.

13. Feldgerät nach einem der voranstehenden Ansprüche 9-12, **dadurch gekennzeichnet, dass** der gegen unbefugtes Auslesen geschützte Speicherbereich in einem ASIC-, FPGA- oder CPLD-Baustein integriert ist.

14. Feldgerät nach einem der voranstehenden Ansprüche 9-13, **dadurch gekennzeichnet, dass** der gegen unbefugtes Auslesen geschützte Speicherbereich in einem Baustein integriert ist, der einen Datenbus oder eine Schnittstelle des Feldgerätes steuert.

15. Feldgerät nach einem der voranstehenden Ansprüche, **dadurch gekennzeichnet, dass** der Kennzeichnungsblock einen Grundfunktionsblock und einen Optionsblock enthält, wobei der Grundfunktionsblock einen freigeschalteten Grundfunktionsumfang des Feldgerätes und der Optionsblock einen freigeschalteten Optionsumfang festlegt, innerhalb dessen benutzerseitig weitere Zusatzfunktionen zu dem Grundfunktionsumfang hinzugefügt werden dürfen, ohne dass es zu einer Blockierung des Feldgerätes durch die Sicherungseinrichtung kommt.

16. Feldgerät nach Anspruch 15,
**dadurch gekennzeichnet, dass** in dem Optionsblock für jede optionale Zusatzfunktion jeweils eine Wertzahl abgespeichert ist und der freigeschaltete Optionsumfang durch einen Maximalwert definiert ist, wobei die Sicherungseinrichtung die Wertzahlen der benutzerseitig ausgewählten Zusatzfunktionen addiert und eine Ausführung der resultierenden Gerätefunktion blockiert, wenn der Summenwert den Maximalwert überschreitet.

17. Feldgerät nach einem der voranstehenden Ansprüche, **dadurch gekennzeichnet, dass** der Kennzeichnungsblock ausschließlich eine einzige Gerätefunktion beschreibt und keine Optionen zulässt.

## Claims

1. Field device (10), in particular a protective device, having a microprocessor arrangement (20) which carries out a program module (PM), which defines the device function, during operation of the field device,
**characterized in that**
- the field device has a protection device (40) which is designed such that it checks whether an input function description block (FB), which describes a device function desired by the user, describes an enabled device function and, if a device function is not enabled, prevents it from being carried out and, if a device function is enabled, allows it to be carried out,
- the protection device being designed such that it compares a feature block (MB) which is contained in the function description block with an identification block (KB), which is stored in the field device or is accessible to the field device and describes the enabled functional scope of the field device, and prevents the device function which is described in the function description block from being carried out if the features which are described in the feature block are not present or are defined as inhibited in the identification block.

2. Field device according to Claim 1,
**characterized in that**
the protection device has an interpreter module (60) which interprets the input function description block (FB) and produces the appropriate program module (PM) using a plurality of function modules (FM) which are preinstalled in firmware in the field device, if the input function description block describes an enabled device function.

3. Field device according to Claim 1 or 2,
**characterized in that**
the identification block is stored in the field device.

4. Field device according to Claim 3,
**characterized in that**
the identification block contains a device identification (ID) which identifies the field device for which the identification block is intended.

5. Field device according to Claim 1 or 2,
**characterized in that**
the identification block is stored in an external memory module which is connected to the field device for its operation.

6. Field device according to Claim 5,
**characterized in that**
the identification block contains a memory identification which identifies the external memory with which the identification block is associated.

7. Field device according to one of the preceding claims, **characterized in that**
the identification block is signed with an electronic signature, and the protection device is designed such that it prevents the further processing of the function description block if the check of the electronic signature gives a negative result (S2).

8. Field device according to Claim 7,
**characterized in that**
the protection device is designed such that it decrypts the identification block, which has been encrypted using a first key of a key pair, in order to check the electronic signature using a second key of the key pair.

9. Field device according to Claim 8,
**characterized in that**
the second key of the key pair is stored in a memory area, which is protected against unauthorized reading, of the field device.

10. Field device according to one of the preceding claims, **characterized in that**
the protection device is designed such that it checks the feature block for the presence of a valid electronic signature, and prevents the further processing of the function description block if the check of the electronic signature gives a negative result (S3).

11. Field device according to Claim 10,
**characterized in that**
the protection device is designed such that it decrypts the feature block, which is being encrypted using a first key of a further key pair, in order to check the electronic signature, using a second key of the further key pair.

12. Field device according to Claim 11,
**characterized in that**
the second key of the further key pair is stored in a memory area which is protected against unauthorized reading.

13. Field device according to one of the preceding Claims 9-12,
**characterized in that**
the memory area which is protected against unauthorized reading is integrated in an ASIC, FPGA or CPLD module.

14. Field device according to one of the preceding Claims 9-13,
**characterized in that**
the memory area which is protected against unauthorized reading is integrated in a module which controls a data bus or an interface of the field device.

15. Field device according to one of the preceding claims, **characterized in that**
the identification block contains a basic function block and an option block, with the basic function block defining an enabled basic functional scope of the field device, and with the option block defining an enabled option scope within which further additional functions may be added to the basic functional scope by the user without this leading to the field device being blocked by the protection device.

16. The field device according to Claim 15,
**characterized in that**
a value number is in each case stored in the option block for each optional additional function, and the enabled option scope is defined by a maximum value, with the protection device adding the value numbers of the additional functions which have been selected by the user and preventing the resultant device function from being carried out if the sum value is more than the maximum value.

17. Field device according to one of the preceding claims, **characterized in that**
the identification block describes only a single device function, and does not allow any options.

## Revendications

1. Appareil ( 10 ) de terrain notamment appareil de protection comprenant un agencement ( 20 ) de microprocesseurs qui, pendant le fonctionnement de l'appareil de terrain, exécute un module ( PM ) de programme définissant la fonction de l'appareil,
**caractérisé en ce que**
- l'appareil de terrain comporte un dispositif ( 40 ) de sécurité qui est conformé de manière à contrôler si un bloc ( FB ) de description de fonction, entré et décrivant une fonction de l'appareil souhaité du côté de l'utilisateur, décrit une fonction libérée de l'appareil et, dans le cas d'une fonction de l'appareil qui n'est pas libérée en bloque l'exécution, ainsi que, dans le cas d'une fonction libérée de l'appareil, en libère l'exécution, dans lequel
- le dispositif de sécurité est conformé de manière à comparer un bloc ( MB ) de caractéristiques contenues dans le bloc de description de fonction à un bloc ( KB ) de caractérisation mémorisé dans l'appareil de terrain ou accessible à l'appareil de terrain et décrivant la capacité de fonction libérée de l'appareil de terrain et bloque l'exécution de la fonction des appareils décrite dans le bloc de description de fonction, si les caractéristiques décrites dans le bloc de caractéristiques manque dans le bloc de caractérisation ou sont définies comme bloquées.

2. Appareil de terrain suivant la revendication 1, **caractérisé en ce que**
le dispositif de sécurité comporte un module ( 60 ) d'interprétation qui interprète le bloc ( RB ) de description de fonction qui est entré et produit le module ( PM ) de programme correspondant en tirant parti d'une multiplicité de modules ( FM ) de fonction pré-installée chez le fabricant dans l'appareil de terrain, si le bloc de description de fonction entrée décrit une fonction d'appareil libérée.

3. Appareil de terrain suivant la revendication 1 ou 2, **caractérisé en ce que** le bloc de caractérisation est mémorisé dans l'appareil de terrain.

4. Appareil de terrain suivant la revendication 3,
**caractérisé en ce que** le bloc de caractérisation contient une identification ( ID ) d'appareil, qui caractérise l'appareil de terrain pour lequel le bloc de caractérisation est déterminé.

5. Appareil de terrain suivant la revendication 1 ou 2, **caractérisé en ce que** le bloc de caractérisation est mémorisé dans un module de mémoire extérieur, qui est relié à l'appareil de terrain pour son fonctionnement.

6. Appareil de terrain suivant la revendication 5,
**caractérisé en ce que** le bloc de caractérisation contient une identification des mémoires, qui caractérise la mémoire extérieure à laquelle le bloc de caractérisation est affecté.

7. Appareil de terrain suivant l'une des revendications précédentes,
**caractérisé en ce que** le bloc de caractérisation est signé par une signature électronique et le dispositif de sécurité est conformé de manière à bloquer le traitement ultérieur du bloc de description de fonction si le contrôle de la signature électronique donne un résultat ( S2 ) négatif.

8. Appareil de terrain suivant la revendication 7,
**caractérisé en ce que** le dispositif de sécurité est conformé de manière à déchiffrer le bloc de caractérisation chiffré par une première clé d'une paire de clés, pour le contrôle de la signature électronique par une deuxième clé de la paire de clés.

9. Appareil de terrain suivant la revendication 8,
**caractérisé en ce que** la deuxième clé de la paire de clés est mémorisée dans une zone de la mémoire de l'appareil de terrain protégée vis-à-vis d'une lecture non autorisée.

10. Appareil de terrain suivant l'une des revendications précédentes,
**caractérisé en ce que** le dispositif de sécurité est conformé de manière à contrôler la présence d'une signature électronique valable dans le bloc de caractéristiques et à bloquer le traitement ultérieur du bloc de description de fonction, si le contrôle de la signature électronique donne un résultat ( S3 ) négatif.

11. Appareil de terrain suivant la revendication 10, **caractérisé en ce que** le dispositif de sécurité est conformé de manière à déchiffrer le bloc de caractéristiques chiffré par une première clé d'une autre paire de clés, pour le contrôle de la signature électronique par une deuxième clé de l'autre paire de clés.

12. Appareil de terrain suivant la revendication 11, **caractérisé en ce que** la deuxième clé de l'autre paire de clés est mémorisée dans une partie de la mémoire protégée d'une lecture non autorisée.

13. Appareil de terrain suivant l'une des revendications précédentes 9 à 12,
**caractérisé en ce que** la partie de la mémoire protégée vis-à-vis d'une lecture non autorisée est intégrée dans un module ASIC, FPGA ou CPLD.

14. Appareil de terrain suivant l'une des revendications précédentes 9 0 13,
**caractérisé en ce que** la partie de mémoire protégée vis-à-vis d'une lecture non autorisée est intégrée dans un module qui commande un bus de données ou l'interface de l'appareil de terrain.

15. Appareil de terrain suivant l'une des revendications précédentes,
**caractérisé en ce que** le bloc de caractérisation contient un bloc de fonction de base et un bloc d'option, le bloc de fonction de base déterminant une capacité libérée de fonction de base de l'appareil de terrain et le bloc d'option une capacité libérée d'option à l'intérieur de laquelle on peut du côté de l'utilisateur ajouter d'autres fonctions supplémentaires à la capacité de fonction de base sans qu'il se produise un blocage de l'appareil de terrain par le dispositif de sécurité.

16. Appareil de terrain suivant la revendication 15, **caractérisé en ce que** un nombre de valeur est mémorisé respectivement dans le bloc d'option pour chaque fonction supplémentaire optionnelle et la capacité d'option libérée est définie par une valeur maximum, le dispositif de sécurité ajoutant les nombres de valeur des fonctions supplémentaires choisies par l'utilisateur et bloquant une exécution de la fonction résultante de l'appareil, si la valeur de la somme dépasse la valeur maximum.

17. Appareil de terrain suivant l'une des revendications précédentes,
**caractérisé en ce que** le bloc de caractérisation décrit exclusivement une fonction unique d'appareil et n'autorise pas d'option.
